# EUROPÄISCHE PATENTSCHRIFT

(11) **EP 1 448 044 B1**
(45) Veröffentlichungstag und Bekanntmachung des Hinweises auf die Patenterteilung: **13.06.2007**
(21) Anmeldenummer: 02774615.5
(22) Anmeldetag: 13.09.2002
(51) Int. Cl.: A01G 9/02

(54) **PFLANZTOPF AUS KUNSTSTOFF**
PLASTIC PLANT POT
POT EN MATIERE PLASTIQUE POUR PLANTES

(30) Priorität: 26.11.2001 DE 20119165 U
(43) Veröffentlichungstag der Anmeldung: 25.08.2004
(73) Patentinhaber: Pöppelmann Holding GmbH & Co. KG., 49393 Lohne (DE)
(72) Erfinder: SCHMIDT, Guido, 49413 Dinklage (DE)
(74) Vertreter: Bünemann, Egon
(86) Internationale Anmeldenummer: PCT/EP2002/010295
(87) Internationale Veröffentlichungsnummer: WO 2003/045129

(56) Entgegenhaltungen:
- EP-A- 0 724 826
- DE-A- 4 000 950
- DE-U- 29 512 334
- US-A- 6 134 832

## Beschreibung

Die Erfindung betrifft einen Pflanztopf nach dem Oberbegriff des Anspruchs 1.

Solch ein Pflanztopf ist aus dem Dokument EP 0 724 826 bekannt.

Pflanztöpfe aus Kunststoff, wie sie in sehr großem Umfang im Erwerbsgartenbau verwendet werden, sind unter verschiedenen Zielsetzungen hoch entwikkelt. Neben üblichen Anforderungen, denenzufolge der Pflanztopf gut in der Serie etwa durch Spritzen oder Tiefziehen fertigbar, leicht, materialsparend und dabei trotz Dünnwandigkeit formsteif und griffest sein soll, bestehen Anforderungen hinsichtlich einer guten Stapelbarkeit, einer maschinengerechten Handhabbarkeit und vor allem auch, unter gärtnerischen Gesichtspunkten, einer guten Be- und Entwässerbarkeit und Belüftbarkeit.

Für ein im Erwerbsgartenbau erforderliches schnelles und vollständiges Entwässern bei Berieselung von oben oder auch bei einer sogenannten Ebbe- und Flutbewässerung wie auch für eine Belüftung von unten werden bodenseitige Löcher vorgesehen. Der Boden selbst wird herkömmlich durch Randstege, Rippen oder sickenartig vom Boden nach unten ausgeformte Füße hochgestellt, so daß die Löcher im Boden nicht durch das Aufsetzen auf eine Aufstellfläche verschlossen sind und somit eine schlechte (Be- und) Entwässerung und insbesondere auch eine schlechte Belüftung erbringen. Die Löcher sind vielmehr unterseitig frei.

Es ergibt sich aber insbesondere mit den materialsparend immer feiner gestalteten Topfböden, daß diese in der Handhabung Probleme aufwerfen. So sind die zur Distanzierung vorgesehenen Randstege oder Füße anfällig gegenüber einem Verhaken in Transportbändern, insbesondere beim Übergang von Band zu Band. Auch sonst sind Querbewegungen der dünnwandigen Töpfe auf einer Schiebefläche durch solche Füße oder Randstege erschwert. Beim maschinellen Aufsetzen der Pflanztöpfe auf eine feste Unterlage, etwa beim Entstapeln, ergeben sich schwer kontrollierbare elastische Rückprallbewegungen, die zu Störungen führen und die Arbeitsgeschwindigkeit herabsetzen.

Die Erfindung schafft von einem Pflanztopf nach dem Oberbegriff des Anspruchs 1 ausgehend mit einer Ausgestaltung nach dem kennzeichnenden Teil des Anspruchs Abhilfe. Diese Ausführungsform verzichtet darauf, die Bodenfläche des Pflanztopfs insgesamt bzw. - bei einem profilierten Boden - seine tieferliegenden Bereiche durch Füße oder Bodenstege aufzuständem und von einer jeweiligen Aufstellfläche freizustellen. Der Boden bzw. dessen tiefstliegende Bereiche sind unmittelbare Auflagebereiche.

Damit nun aber überschüssig im Pflanztopf vorliegendes oder von oben zugeführtes Wasser schnell und vollständig ablaufen kann, müssen die tiefstgelegenen Bodenbereiche mit Löchern versehen sein und diese dürfen auch nicht von unten her von der Aufstellfläche verschlossen werden. Letzteres wird dadurch sichergestellt, daß die Löcher von randseitig hinausführenden Kanälen in Form von Bodensicken durchquert werden. Das Wasser kann also durch die Löcher nach unten und dann unter dem Rand hinauslaufen. Darüber hinaus ist aber insbesondere bei diesen Bodenlöchern eine ausreichende Belüftung, also eine guter Luftzutritt zu den Bodenlöchern sicherzustellen. Dies wird dadurch gefördert, daß die Kanäle in zumindest zwei Richtungen durchgängig ausgeführt sind. Würden die Kanäle nur in einer Richtung etwa vom Loch zum Rand hin durchgängig sein, könnte vielleicht kapillar anhaftendes Wasser gehalten werden. Vor allem aber würde eine Ventilation unter dem Loch, die einen ausreichenden Luftzugang sichert, erschwert.

In mechanischer Hinsicht hat sich ein solcher Topf mit einem Boden ohne Aufstellfüße oder -stege als sehr vorteilhaft herausgestellt. Erwartungsgemäß treten die Transportprobleme beim Verschieben oder beim Fördern auf Bändern nicht mehr auf. Der großflächig aufstehende Boden neigt auch nicht zum Rückfedern oder Prallen beim Entstapeln oder beim maschinellen Aufsetzen auf eine Aufstellfläche. Überdies ergibt sich bei vergleichbarer Bauhöhe ein Volumengewinn, da der zuvor unter dem Boden freigehaltene Bereich wegfällt und dem Innenraum zugute kommen kann. Andererseits kann damit bei vorgegebenem Volumen die Höhe des Pflanztopfs reduziert werden.

Ein Ausführungsbeispiel der Erfindung ist in der Zeichnung dargestellt und wird nachfolgend näher beschrieben. In der Zeichnung zeigen:

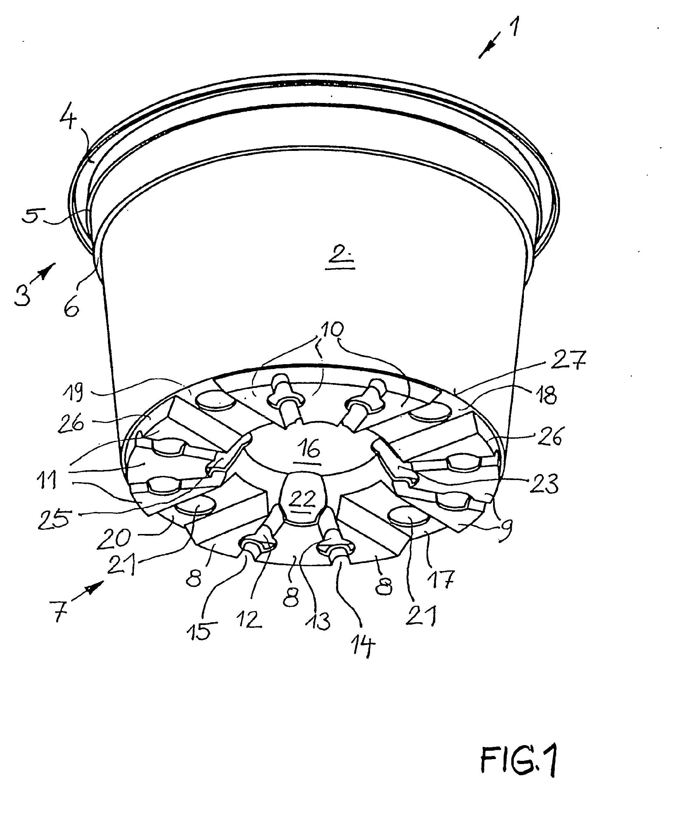

Fig. 1 Ansicht eines Pflanztopfs schräg von unten

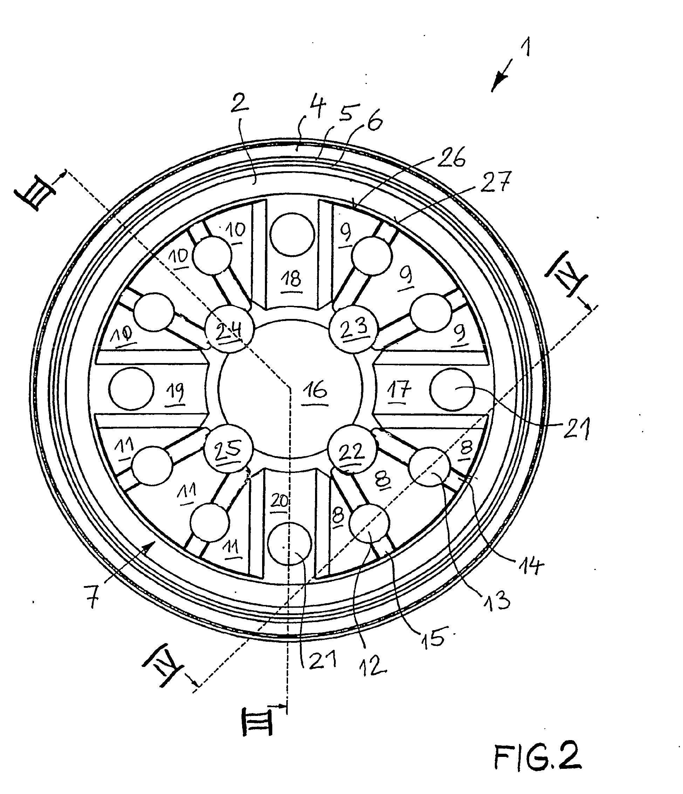

Fig. 2 Bodenansicht des Pflanztopfs nach Fig. 1
Fig. 3 Schnitt nach Linie III-III in Fig. 2 und
Fig. 4 Schnitt nach Linie IV-IV in Fig. 2.

Der in der Zeichnung insgesamt mit 1 bezeichnete Pflanztopf hat eine stumpfkegelige Form mit einem Kegelwinkel von üblicherweise 5 bis 8° im Bereich einer Wand 2, die zu einer oberseitigen Öffnung hin mit einem Randbereich 3 versehen ist, der einen Flansch 4 und Schultern 5,6 zur Versteifung, zur Handhabung und zur Festlegung eines vorgegebenen Stapelabstands aufweist.

Unterseitig ist der Pflanztopf 1 mit einem Boden 7 versehen, der eine Profilierung aufweist. Die Form des Bodens weist vier etwa sektorförmige Bodenbereiche 8,9,10,11 auf, die die tiefstliegenden Bereiche des Bodens bilden und auf einer Aufstellfläche flach aufliegen.

Diese Bodenbereiche 8,9,10,11 sind jeweils mit Löchern 12,13 versehen, damit auch die tiefstgelegenen Innenräume des Topfes unmittelbar oberhalb dieser Bodenbereiche 8,9,10,11 bei einer Brausebewässerung oder bei einer Ebbe- und Flut-Bewässerung zu entwässern sind. Damit der Ablauf von Wasser durch die Löcher auch nach außen hin gewährleistet ist, sind sie von unterseitigen Kanälen 14 bzw. 15 in Form von nach unten hin hohlen Bodensicken durchquert, die randseitig hinausführen. Vorteilhaft ist dabei insbesondere der kurze und direkte Weg zum Rand, etwa der radiale Verlauf bei einem runden Pflanztopf.

Die Kanäle 14,15 sind aber nicht nur in der einen Richtung zum Rand hin geführt, sondern auch in Gegenrichtung zu einem erhöhten Mittelbereich 16 des Bodens 7 durchgeführt, so daß die Kanäle horizontalen Durchgang haben. Dies gewährleistet etwa bei schrägstehenden Töpfen, daß das Wasser auch bei höherliegendem benachbartem Rand abfließen kann. Es verhindert mit der Durchgängigkeit der Kanäle 14,15 auch, daß das Wasser kapillar oder durch mangelnden Druckausgleich zurückgehalten wird. Vor allem aber gewährleistet die Durchgängigkeit der Kanäle eine Belüftung zum Topf hin mit einem freigängigen horizontalen Luftaustausch.

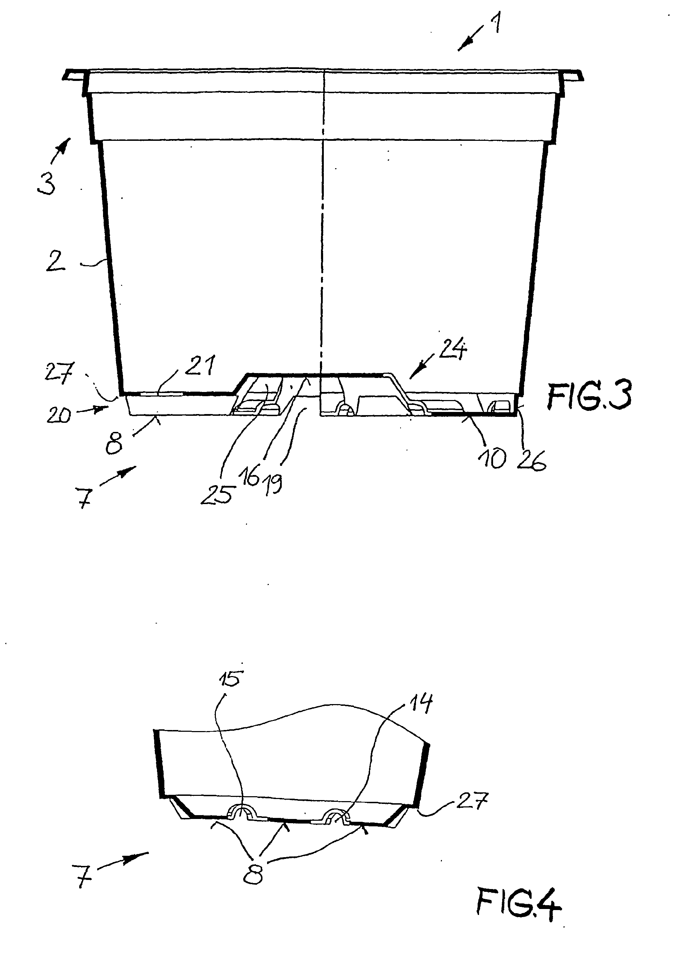

Wie insbesondere aus Fig. 4 ersichtlich ist, haben die Kanäle 14,15 einen gerundeten, ausreichen hohen, gut etwa halbkreisförmigen Querschnitt. Für die Funktion der Kanäle ist durchaus bedeutsam, daß die Höhenabmessung ausreichend ist, um den Austausch von Luft und Wasser zu gewährleisten. Vorzugsweise entspricht die Höhe der Kanäle mindestens der halben Kanalbreite.

Eine weitergehenden Profilierung des Bodens neben den Bodenbereichen 8,9,10 und 11,die ihrerseits jeweils noch durch die Kanäle 14,15 untergliedert sind, und dem Mittenbereich 16 ergibt sich mit einem sogenannten "Bodenkreuz", d.h. mit radial vom Mittenbereich 16 zum Rand frei auslaufenden Hohlrippen 17,18,19 und 20, jeweils zwischen zwei der Sektoren 8,9,10 und 11, die der Formsteifigkeit des Bodens dienen und die auch ihrerseits wieder mit einem Entwässerungsloch ausgestattet sind, etwa einem Entwässerungsloch 21 der Bodenrippe 17.

Für die Entwässerung des Topfes wegen ihrer Größe besonders vorteilhaft sind vier Löcher 22,23,24 und 25, die nicht, wie die anderen Löcher, in einem flachen bzw. ebenen Bodenbereich angeordnet sind, sondern in einem Versatzbereich zwischen zwei Bodenebenen. Hier liegen sie in dem steilen, fast senkrechten Bodenteilen, die die tiefstgelegenen Bodenbereiche 8,9,10,11 mit dem Mittenbereich 16 verbindet. In solchen wandartig angestellten Bodenteilen lassen sich die Löcher relativ groß ausbilden, da das Gewicht der Topffüllung wie Erde oder Substrat in dem Topf etwa parallel zur Lochfläche wirkt und weil auch der maschinell oder von Hand beim Pflanzen ausgeübte Druck im wesentlichen von oben und damit diese Löcher wenig belastend auftritt.

Der profilierte Boden geht von seinen tiefgelegenen Bodenbereichen 8,9,10,11 1 nicht unmittelbar in die Wand 2 über, vielmehr sind hier jeweils Konsolenstreifen 26 und eine Stufenkante 27 vorgesehen, die zum einen eine Verbesserung der Querschnittssteifigkeit und zum anderen einen klaren optischen Abschluß des Bodens zur Wand 2 hin schaffen.

Im Ergebnis ist der Bodenbereich bei aller Profilierung mit einer großen Unterfläche versehen, die aus den Bodenbereichen 8,9,10,11 gebildet ist. Dies sichert einen festen Auftritt des Topfes auf einer Aufstellfläche, verhindert nachgiebige Ausweichbewegungen oder elastisches Rückprallen beim maschinellen Versetzen der Töpfe und erspart insbesondere auch Stege und Füße, die sich in Transportmitteln wie Förderbändern oder Rutschen an Übergängen oder Fugen verhaken können.

## Patentansprüche

1. Pflanztopf (1) aus Kunststoff, insbesondere in tiefgezogener Ausführung, mit einem mit Löchern versehenen Boden (7) und unterseitigen Hohllage-Bereichen des Bodens (7) zur Verbindung der Löcher mit der bodenseitigen Umgebung, **dadurch gekennzeichnet, daß** die Löcher (12,13) zumindest teilweise in Bodenbereichen (8,9,10,11) angeordnet sind, die ohne Distanzierung auf einer Aufstellfläche aufliegen, und von unterseitigen in zumindest zwei Richtungen durchgängigen und randseitig hinausführenden Kanälen (14,15) in Form von Bodensicken durchquert werden.

2. Pflanztopf nach Anspruch 1, **dadurch gekennzeichnet, daß** die Kanäle (14,15) vorwiegend radial ausgerichtet sind.

3. Pflanztopf nach Anspruch 1 oder 2, **dadurch gekennzeichnet, daß** die Kanäle (14,15) in einen zentralen Hohlbereich (16) einmünden

4. Pflanztopf nach einem der Ansprüche 1 bis 3, **dadurch gekennzeichnet, daß** die Breite der Kanäle (14,15) zumindest teilweise geringer als die Breite der Löcher ist.

5. Pflanztopf nach einem der Ansprüche 1 bis 4, **dadurch gekennzeichnet, daß** die Höhe der Kanäle (14,15) zumindest gleich der halben Breite ist.

6. Pflanztopf nach einem der Ansprüche 1 bis 5, **dadurch gekennzeichnet, daß** der Boden (7) neben den ohne Distanzierung auf eine Aufstellfläche aufstellbaren Bodenbereiche (8,9,10,11) höherliegende Bodenbereiche (16, 17, 18, 19, 20) aufweist.

7. Pflanztopf nach Anspruch 6, **dadurch gekennzeichnet, daß** die in unterschiedlichen Höhen liegenden Bodenbereiche (8 bis 11, 16 bis 20) durch Bodenabschnitte mit steiler Ausrichtung verbunden sind, in denen Ablauflöcher (22,23,24,25) angeordnet sind.

8. Pflanztopf nach einem der Ansprüche 1 bis 7, **dadurch gekennzeichnet, daß** der Boden mit einer (unterseitig) nach außen offenen Profilierung versehen ist, die mit einer Stufenkante (27) von der Wand (2) des Topfes abgesetzt ist.

## Claims

1. Plant pot (1) of plastics material, particularly produced by deep-drawing, having a floor (7) provided with holes and having hollowed-out regions on the underside of the floor (7) for connecting the holes to the surroundings at the floor, **characterised in that** at least some of the holes (12, 13) are arranged in regions (8, 9, 10, 11) of the floor which rest on a supporting surface without being spaced away therefrom and which are crossed by channels (14, 15) in the form of flutes in the floor which are on the underside, which are continuous in at least two directions and which run out to the edges.

2. Plant pot according to claim 1, **characterised in that** the channels (14, 15) are oriented predominantly in the radial direction.

3. Plant pot according to claim 1 or 2, **characterised in that** the channels (14, 15) open into a central hollow region (16).

4. Plant pot according to one of claims 1 to 3, **characterised in that** the width of the channels (14, 15) is, at least in some cases, less than the width of the holes.

5. Plant pot according to one of claims 1 to 4, **characterised in that** the height of the channels (14, 15) is at least equal to half their width.

6. Plant pot according to one of claims 1 to 5, **characterised in that**, as well as the regions (8, 9, 10, 11) which can be stood down on a supporting surface without being spaced away therefrom, the floor (7) has regions (16, 17, 18, 19, 20) situated at a higher level.

7. Plant pot according to claim 6. **characterised in that** the regions (8 to 11, 16 to 20) of the floor which are situated at different heights are connected by steeply aligned portions of the floor in which drain holes (22, 23, 24, 25) are arranged.

8. Plant pot according to one of claims 1 to 7, **characterised in that** the floor is provided with profiling which is open in the outward direction (on the underside) and which is offset from the wall (2) of the pot by a stepped edge (27).

## Revendications

1. Pot (1) en matière plastique pour plante, notamment réalisé par emboutissage profond, comportant un fond (7) muni de trous et de zones en creux dans la face inférieure du fond (7) pour relier les trous à l'environnement du fond,
**caractérisé en ce que**
les trous (12, 13) sont prévus au moins en partie dans des zones de fond (8, 9, 10, 11, 12) qui s'appuient sans être écartées sur une surface d'appui et sont traversées par des canaux (14, 15) en forme de moulures réalisées dans le fond, traversant dans deux directions et débouchant du côté du bord.

2. Pot à plante selon la revendication 1,
**caractérisé en ce que**
les canaux (14, 15) sont alignés principalement radialement.

3. Pot à plante selon la revendication 1 ou 2,
**caractérisé en ce que**
les canaux (14, 15) débouchent dans une zone creuse centrale (16).

4. Pot à plante selon l'une des revendications 1 à 3,
**caractérisé en ce que**
la largeur des canaux (14, 15) est, au moins en partie, inférieure à la largeur des trous.

5. Pot à plante selon l'une des revendications 1 à 4,
**caractérisé en ce que**
la hauteur des canaux (14, 15) est au moins égale à la demi-largeur.

6. Pot à plante selon l'une des revendications 1 à 5,
**caractérisé en ce que**
le fond (7) comporte en plus des zones de fond (8, 9, 10, 11) s'appuyant sur une surface d'appui sans moyen d'écartement, également des zones de fond, relevées (16, 17, 18, 19, 20).

7. Pot à plante selon l'une des revendications 1 à 7,
**caractérisé en ce que**
les zones de fond (8-11, 16-20) situées à des hauteurs différentes sont reliées par des segments de fond très inclinés munis des orifices de sortie (22, 23, 24, 25).

8. Pot à plante selon l'une des revendications 1 à 7,
**caractérisé en ce que**
le fond est muni d'un profilage ouvert vers l'extérieur (côté inférieur) et décroché de la paroi (2) du pot par une arête étagée (27).
